Europäisches Patentamt

European Patent Office

Office européen des brevets

(19)

(11) **EP 1 193 016 A2**

(12) **EUROPEAN PATENT APPLICATION**

(43) Date of publication:
**03.04.2002 Bulletin 2002/14**

(51) Int Cl.⁷: **B23H 1/02**, B23H 7/04,
B23H 7/02

(21) Application number: **01307270.7**

(22) Date of filing: **24.08.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **25.08.2000 JP 2000255254**

(71) Applicant: **FANUC LTD
Minamitsuru-gun, Yamanashi 401-0597 (JP)**

(72) Inventors:
• **Murai, Masao
Minamitsuru-gun, Yamanashi, 401-0511 (JP)**

• **Kawahara, Akiyoshi
Minamitsuru-gun, Yamanashi, 401-0511 (JP)**
• **Sakurai, Akihiro
Minamitsuru-gun, Yamanashi, 401-0511 (JP)**

(74) Representative: **Billington, Lawrence Emlyn et al
Haseltine Lake & Co.
Imperial House
15-19 Kingsway
London WC2B 6UD (GB)**

(54) **Electic discharge machining apparatus**

(57)     An electric discharge machining apparatus is provided which is capable of sufficiently reducing stray capacitance (C1) between an electrode (1) and a workpiece (7) to improve surface roughness of a machined workpiece by electric discharge machining. A first switching device (11a) is provided in a feeding line (4a) between an electrode (1) and a first machining power source (2) for supplying a first electric discharge energy for a rough machining, and a second switching device (11b) is provided in a feeding line (4b) between the workpiece (7) and the first power source (2) in an electric discharge circuit in which the workpiece (7) and a workpiece mounting table (6) are electrically insulated. In performing a finish machining, a second electric discharge energy smaller than the first machining energy is supplied from a second machining power source (3) between the electrode (1) and the workpiece (7) with the first and second switches opened.

FIG. 1

**Description**

BACKGROUND OF THE INVENTION

1. Field of the Invention

The present invention relates to an electric discharge machining apparatus for machining a workpiece by an electric discharge between an electrode and the workpiece, and in particular to an electric discharge machining apparatus for improving surface roughness of a machined workpiece.

2. Description of Related Art

In an electric discharge machining apparatus, it is required to improve a machining speed in a rough machining and also to improve surface roughness of a machined workpiece in a finish machining. So as to fulfill these requirements, it is known to provide two kinds of power sources for the rough machining and the finish machining.

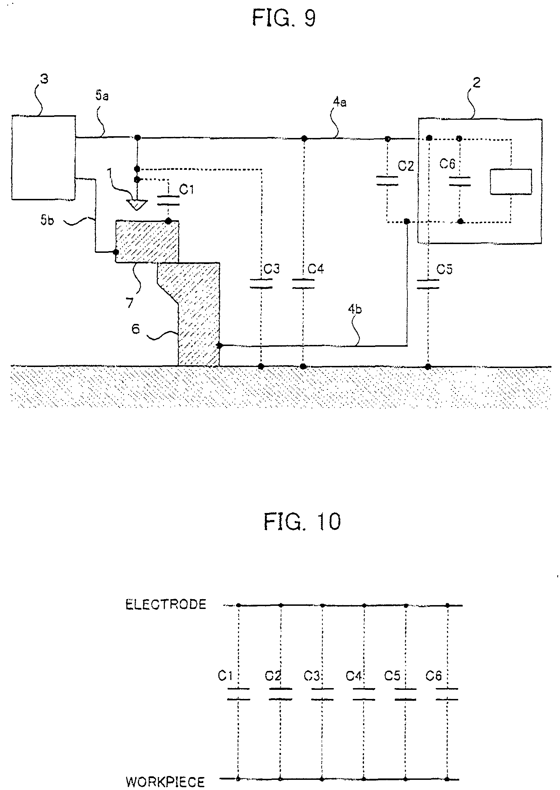

FIG. 9 shows a schematic arrangement of a basic electric discharge circuit of a conventional electric discharge machining apparatus and FIG. 10 shows a circuit equivalent to stray capacitances in the basic electric discharge circuit shown in FIG. 9. In FIG. 9, the electric discharge machining apparatus comprises an electrode 1, a workpiece mounting device (table) 6 for mounting a workpiece 7, a first machining power source 2 and a second machining power source 3 for supplying electric discharge energy between the electrode 1 and the workpiece 7. The first machining power source 2 supplies an relatively large electric discharge energy for a rough machining, and the second machining power source 3 supplies an relatively small electric discharge energy for a finish machining.

In general, it is necessary to perform an electric discharge machining with a small electric discharge energy so as to improve surface roughness of a machined surface. The electric discharge energy is proportional to a product of an electric discharge current I and an electric discharge time period $\tau$ and is expressed in the following equations.

$$I = (Eo - Ea)\,(C/L)^{1/2} \tag{1}$$

$$\tau = \pi\,(L \cdot C)^{1/2} \tag{2}$$

In the above equations, Eo represents an electric discharge voltage, Ea represents an arc voltage, C represents capacitance and L represents inductance in the electric discharge circuit.

Thus, the conventional electric discharge machining apparatus has a problem that the electric discharge energy can not be suppressed under a certain value because the electric discharge machining apparatus itself has considerable stray capacitance.

In FIG. 10, stray capacitances in the basic electric discharge circuit shown in FIG. 9 are shown as an equivalent circuit. The actual stray capacitances exist as distributed constants in the electric discharge circuit and are simply represented by concentrated constants in FIG. 10.

In the electric discharge circuit in FIG. 9, there appear a stray capacitance C1 between the electrode 1 and the workpiece 7, a stray capacitance C3 between the electrode 1 and the table 6 (workpiece mounting device), a stray capacitance C2 between feeding lines of the second power source 2, etc. In general, since a body of the electric discharge machining apparatus is electrically connected to the ground for safety and the table 6 and a machining tank are not electrically isolated with the body of the electric discharge machining apparatus, the table and the machining tank are ultimately electrically connected to the ground. Thus, sections of the electric discharge machining apparatus electrically connected to the ground will be referred to as the table.

The first machining power source 2 supplies a large electric discharge energy between the electrode 1 and the workpiece 7 to perform a rough machining. It is therefore necessary to reduce inductance of the electric discharge circuit so as to flow a large machining current. For this purpose, coaxial cables are generally employed as feeding lines. The coaxial cables have relatively small inductance but relatively large capacitance. Therefore, a stray capacitance between the feeding lines has larger value in comparison with the other stray capacitances.

Further, it is also required to reduce inductance within the first machining power source 2 so as to flow the large machining current. Thus, in the case of using printed boards in the first machining power source 2, respective distribution patterns on the printed boards are designed to be wide and the printed boards arc arranged to be opposed to each other. Therefore, the stray capacitance C6 in the first machining power source 2 is made larger to include capacitances of semiconductor elements in the circuits.

Thus, in the case where a workpiece is directly mounted on the table 6. all of the stray capacitances C1-C6 are electrically connected in parallel to form a large total stray capacitance in the circuit. Particularly, the stray capacitances C2 and C6 have large values.

Methods for reducing the stray capacitance in the electric discharge circuit are known from the disclosure in Japanese Patent Laid-Open Publication Nos. Showa 62-188625 and Heisei 5-53570.

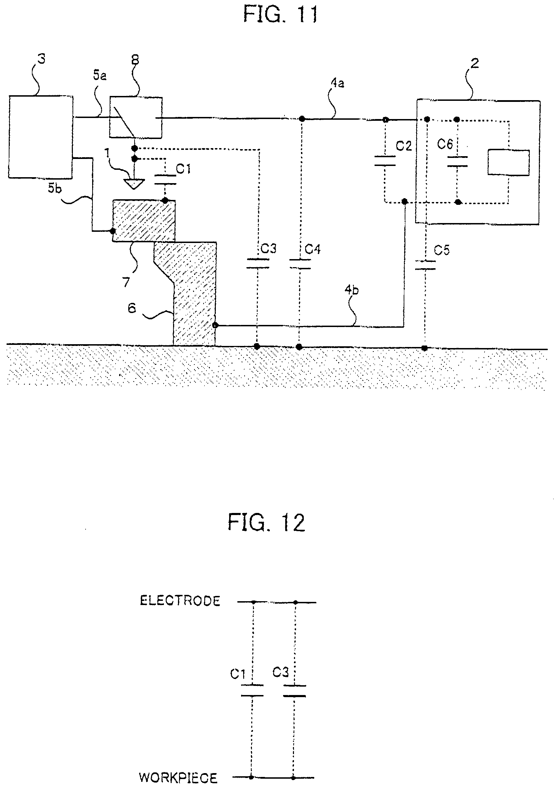

In the arrangement disclosed in Japanese Patent Laid-Open Publication No. Showa 62-188425 as shown in FIG. 11, a feeding path for a rough machining and a feeding path for a finish machining are switched over by moving a contact piece or the electrode 1, to separate an electrode-side feeding line of the first machining power source 2 from the electric discharge circuit in performing a finish machining. With this arrangement, as shown in FIG. 12, the stray capacitances C2, C4, C5 and C6 are isolated from the electric discharge circuit by separating the electrode-side feeding line of the first electric discharge power source 2. In this example, there is a problem that an influence of the stray capacitance C3 between the electrode 1 and the table 6 can not be reduced.

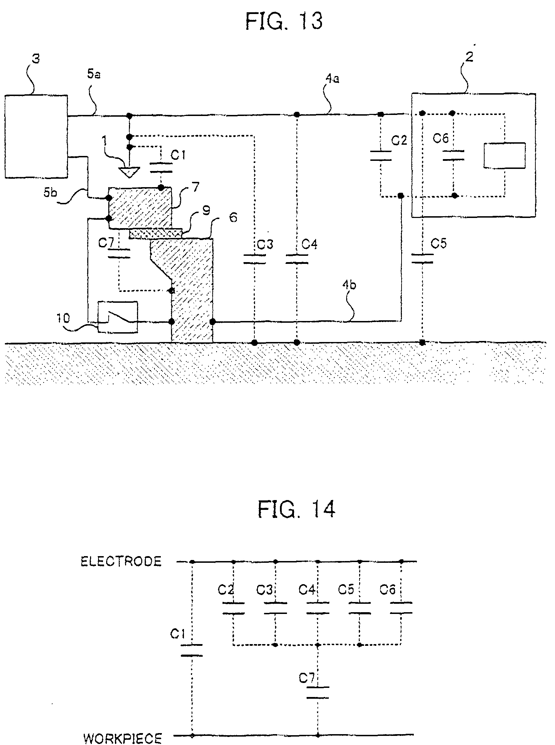

Further, in an electric discharge circuit arrangement shown in Japanese Patent Laid-Open Publication No. Showa 5-53570 as shown in FIG. 13, a workpiece 7 is electrically insulated from the table 6 by an insulator 9 and electrically connected/disconnected by a cable and a switch 10 interposed thereon. In performing a finish machining, the workpiece 7 and the table 6 are insulated from each other by the switch 10. With this arrangement, a stray capacitance C7 appears between the workpiece 7 and the table 6 and is electrically connected in series to the other stray capacitances C2-C6 as shown in FIG. 14. Thus, the total stray capacitance between the electrode 1 and the workpiece 7 is made not greater than the stray capacitance C7. The stray capacitance C7 exists before the switch 10 is opened, but in the state where the switch 10 is closed terminals of the stray capacitance C7 are shorted to produce no influence on the other capacitances. In this example, the stray capacitance between the workpiecc 7 and the table 6 is reduced to be not greater than the capacitance C7, but there arises a problem that an influence of the stray capacitance C7 is not sufficiently reduced because of the large stray capacitances C2 and C6 and the total stray capacitance is made substantially equal to the stray capacitance C7.

Thus, the conventional electric discharge machines have a problem of incapable of reducing the stray capacitance between the electrode and the workpiece for improving the surface roughness of the machined workpiece

## SUMMARY OF THE INVENTION

An object of the present invention is to sufficiently reduce the stray capacitance between the electrode and the workpiece to improve roughness of the finished surface by the electric discharge machining.

An electric discharge machining apparatus of the present invention comprises: an electrode; a first machining power source for supplying a first electric discharge energy between the electrode and the workpiece; a second machining power source for supplying a second electric discharge energy smaller than the second electric discharge energy between the electrode and the workpiece; a workpiece mounting device for mounting the workpiece; an insulator for electrically insulating the workpiece from the workpiece mounting device; a first switching device disposed in a first feeding line from the first machining power source to the electrode; a second switching device disposed in a second feeding line from the first machining power source to the workpiece. The first and second switching devices are closed when supplying the first electric discharge energy form the first machining power source and the first and second switching devices are opened when supplying the second electric discharge energy form the second machining power source.

The first switching device opens/closes a first feeding line the from the first machining power source to the electrode, and the second switching device opens/closes a second feeding line from the first machining power source to the workpiece. For performing a rough machining, the first electric discharge energy is supplied form the first machining power source with the first and second switching devices are closed. For performing a finish machining, the second electric discharge energy smaller than the first: electric discharge energy is supplied form the second machining power source with the first and second switching devices are opened. Thus, the total stray capacitance in the feeding circuit in the finish machining is reduced by separating the stray capacitances from the feeding circuit and connecting the stray capacitances in series by means of opening the first and second switching devices in the fine machining to thus improve the surface roughness.

The first and second switching devices may be arranged at various positions in the feeding line.

The first switching device may be arranged in the vicinity of the electrode and the second switching device may be arranged in the vicinity of the workpiece. With this arrangement, a stray capacitance between the feeding line arid the first machining power source is separated from the electric discharge energy feeding circuit and a stray capacitance between the electrode and the table and a stray capacitance between the workpiece and the table are connected in series to suppress the total capacitance in the feeding circuit in a finish machining.

The first switching device may be arranged in the vicinity of the first machining power source and the second switching device may be arranged in the vicinity of the workpiece. With this arrangement, the stray capacitance between the workpiece and the table is connected with the other stray capacitances in series and the large stray capacitances between the first and second feeding lines and between the power supply circuit lines in the first machining power source are connected to small stray capacitances in series to suppress the total capacitance in the feeding circuit in a finish machining.

The first switching device may be arranged in the vicinity of the electrode and the second switching device is arranged in the vicinity of the first machining power source. With this arrangement, the stray capacitance between the workpiece and the table is connected with the other stray capacitances in series and the large stray capacitances between the first and second feeding lines and between the power supply circuit lines in the first machining power source are connected to small stray capacitances in series to suppress the total capacitance in the feeding circuit in a finish machining.

BRIEF DESCRIPTION OF THE DRAWINGS

FIG. 1 is a schematic diagram of an electric discharge circuit of an electric discharge machining apparatus according to a first embodiment of the present invention;

FIG. 2 is a diagram of a circuit equivalent to stray capacitances in the electric discharge circuit shown in FIG. 1;

FIG. 3 is a schematic diagram of an electric discharge circuit of an electric discharge machining apparatus according to a second embodiment of the present invention;

FIG. 4 is a diagram of a circuit equivalent to stray capacitances in the electric discharge circuit shown in FIG. 3;

FIG. 5 is a schematic diagram of an electric discharge circuit of an electric discharge machining apparatus according to a third embodiment of the present invention;

FIG. 6 is a diagram of a circuit equivalent to stray capacitances in the electric discharge circuit shown in FIG. 5;

FIG. 7 is a schematic diagram showing an arrangement for directly supplying electric current to a workpiece;

FIG. 8 is a schematic diagram showing an arrangement for indirectly supplying electric current to a workplace through an fixture;

FIG. 9 is a schematic diagram for showing an arrangement of a basic electric discharge circuit of an conventional electric discharge machining apparatus;

FIG. 10 is a diagram of a circuit equivalent to stray capacitances of the basic electric discharge circuit shown in FIG. 9;

FIG. 11 is a schematic diagram for showing an arrangement of an electric discharge circuit of an electric discharge machining apparatus according to first prior art;

FIG. 12 shows a circuit equivalent to stray capacitances of the electric discharge circuit shown in FIG. 11;

FIG. 13 is a schematic diagram for showing an arrangement of an electric discharge circuit of an electric discharge machining apparatus according to second prior art;

FIG. 14 shows a circuit equivalent to stray capacitances of the electric discharge circuit shown in FIG. 13

DETAILED DESCRIPTION OF THE PREFERRED EMBODIMENTS

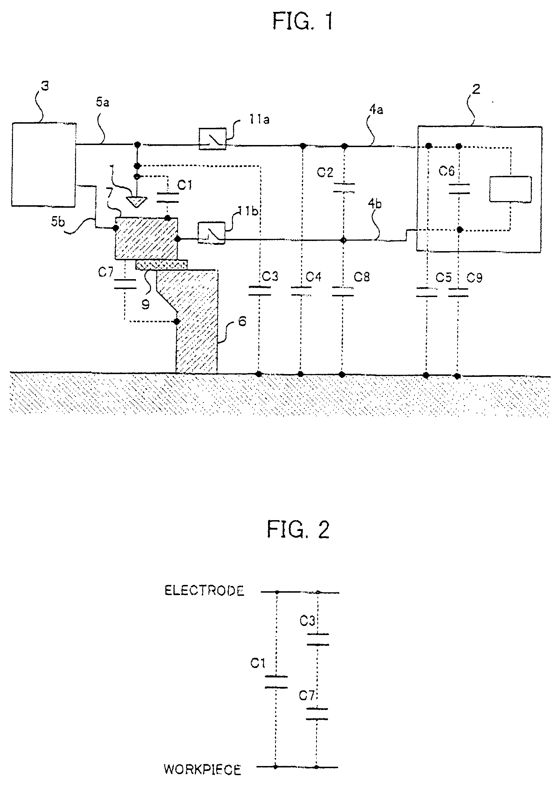

In a first embodiment shown in FIG. 1, an electric discharge machine comprises an electrode 1, a workpiece mounting table 6 for mounting a workpiece 7, an insulator 9 for electrically insulating the workpiece 7 from the table 6, first and second machining power sources 2 and 3 for supplying an electric discharge energy between the electrode 1 and the workpiece 7, a first electrode-side feeding line 4a connecting the first machining power source 2 and the electrode 1, a first workpiece-side feeding line 4b connecting the first machining power source 2 and the workpiece 7, a second electrode-side feeding line 5a connecting the second machining power source 3 and the electrode 1, a second workpiece-side feeding line 5b connecting the second machining power source 2 and the workpiece 7, a electrode-side feeding line switching device 11a provided in the first electrode-side feeding line 4a and a workpiece-side feeding line switching device 11b provided in the first workpiece-side feeding line 4b. The first machining power source 2 supplies a large electric discharge energy between the electrode 1 and the workpiece 7 for performing a rough machining, and the second machining power source 3 supplies an electric discharge energy smaller than that of the first machining power source 2 for performing a finish machining.

According to the first embodiment of the present invention, the switching device 11a is arranged in the vicinity of the electrode 1 and the switching device 11b is arranged in the vicinity of the workpiece 7.

With this circuit arrangement, there appear a stray capacitance C8 between the first workpiecc-side supply line 4b and the table 6 and a stray capacitance C9 between a power supply circuit in the first machining power source 2 and the table 6 which has not been manifest in the conventional circuit arrangement.

FIG. 2 schematically shows stray capacitances in the electric discharge circuit shown in FIG. 1 in the state where the switching device 11a and the switching device 11b are open. The actual stray capacitances exist as distributed constants and are simplified by representing them as concentrated constants in FIG. 2.

For performing the finish machining, a relatively small electric discharge energy is supplied between the electrode 1 and the workpiece 7 from the second machining power source 3 by opening the switching device 11a and the switching device 11b.

In this state, the stray capacitance C1 between the electrode 1 and the workpiece 7, the stray capacitance C3 between the electrode 1 and the table 6, the stray capacitance C7 between the workpiece 7 and the table 6 appear in the electric discharge circuit, and the stray capacitance C3 and the stray capacitance C7 are connected with each other in series. The stray capacitance C2 between the first electrode-side feeding line 4a and the first workpiece-side feeding line 4b and the stray capacitance C6 between the electrode-side power supply circuit line and the workpiece-side power supply circuit line of the first machining power source 2 are separated from the electric discharge circuit.

Thus, in the finish machining, since the large stray capacitances C2 and C6 are separated from the electric discharge circuit and the stray capacitance C3 and the stray capacitance C7 are connected in series, the total stray capacitance between the electrode 1 and the workpiece 7 in the finish machining are greatly reduced in comparison with the conventional electric discharge circuit.

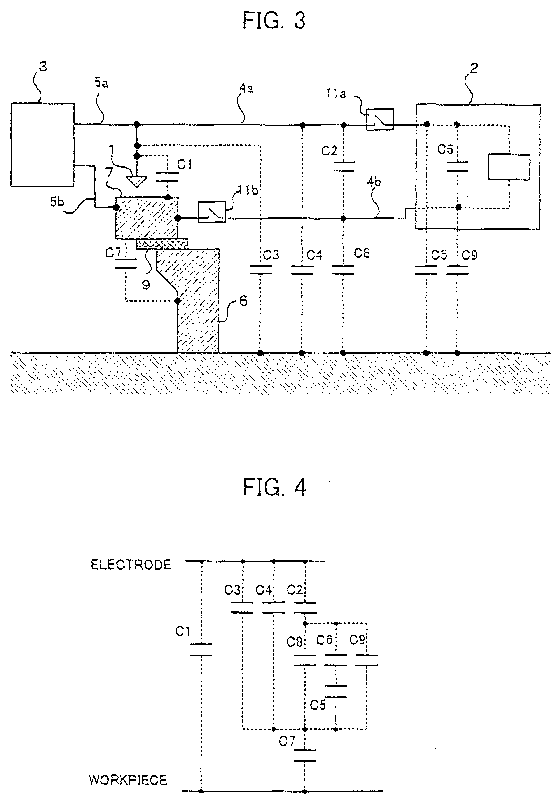

FIGS. 3 and 4 show a second embodiment of the present invention. A circuitry according to this embodiment is similar to that shown in FIG. 1 but differs from the arrangement of the first embodiment in the position of the arrangement of the electrode-side feeding line switching device 11a.

In this embodiment, the electrode-side feeding line switching device 11a is arranged in the vicinity of the first machining power source 2 and the workpiece-side feeding line switching device 11b is arranged in the vicinity of the workpiece 7.

With this arrangement, there appear the stray capacitance C8 between the first workpiece-side feeding line 4b and the table 6, and the stray capacitance C9 between the workpiece-side power supply circuit line of the first machining power source 2 and the table, which have not been manifest in the conventional electric discharge circuit.

FIG. 4 schematically shows the stray capacitances equivalent to the stray capacitances in the electric discharge circuit shown in FIG. 3 in which the electrode-side feeding line switching device 11a and the workpiece-side feeding line switching device 11b are open. The actual stray capacitances exist as distributed constants and are simplified by representing them as concentrated constants in FIG. 4,

The finishing machining is performed by supplying a relatively small electric discharge energy between the electrode 1 and the workpiece 7 from the second machining power source 3 with the electrode-side feeding line switching device 11a and the workpiece-side feeding line switching device 11b open.

The stray capacitance in this state, the stray capacitance C1 between the electrode 1 and the workpiece 7, the stray capacitance C2 between the first electrode-side feeding line 4a and the first workpiece-side feeding line 4b, the stray capacitance C3 between the electrode 1 and the table 6, the stray capacitance C4 between the first electrode-side feeding line 4a and the table 4b, the stray capacitance C5 between the electrode-side power supply circuit of the first machining power source 2 and the table 6, the stray capacitance C6 between the electrode-side power supply circuit line and the workpiece-side power supply circuit line of the first machining power source 2, and the stray capacitance C7 between the workpiece 7 and the table 6, and the stray capacitance C8 between the first workpiece-side feeding line 4b and the table 6. and the stray capacitance C9 between the workpiece-side power supply circuit line of the first machining power source 2 and the table 6. The large stray capacitances C2, C6 are connected with the small stray capacitance in series and connected in series with the stray capacitance C7 together with the stray capacitance C3.

Thus, the total stray capacitance in the electric discharge circuit in finish machining is reduced in comparison with the conventional circuit arrangement since the stray capacitances other than the stray capacitance C7 are connected with the stray capacitance C7 in series and the large stray capacitances C2 and C6 are connected with the small stray capacitances C5 and C7 in series.

In this embodiment, the electrode-side supply line switching device 11a may be arranged within the first machining power source 2 to obtain the substantially the same effects.

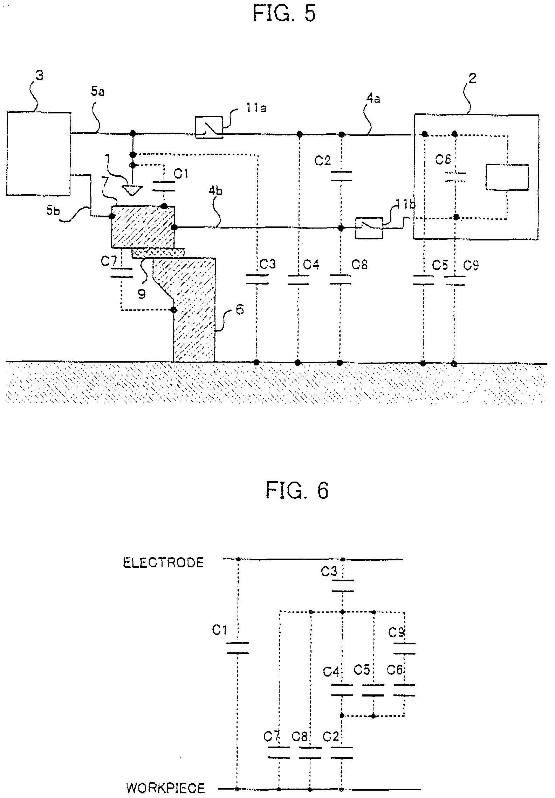

FIG. 5 shows an electric discharge circuit according to the third embodiment of the present invention and FIG. 6 shows an equivalent circuit of the stray capacitances.

In this embodiment, the electrode-side feeding line switching device 11a is arranged in the vicinity of the electrode 1 and the workpiece-side feeding line switching device 11b is arranged in the vicinity of the first machining power source 2.

With this arrangement, there appear the stray capacitance C8 between the first workpiece-side feeding line 4b and the table 6 and the stray capacitance C9 between the workpiecc-side power supply circuit line of the first machining power source 2 and the table 6, which have not been manifest in the conventional arrangement of the electric discharge circuit.

FIG. 6 schematically shows the stray capacitances in the electric discharge circuit shown in FIG. 5 in the stage where the electrode-side feeding line switching device 11a and the workpiece-side feeding line switching device 11b are open. The actual stray capacitances exist as distributed constants and arc simplified by representing them by the concentrated constants in FIG. 6.

The finish machining is performed by supplying a relatively small electric discharge energy between the electrode 1 and the workpiece 7 from the second machining power source 3 with the electrode-side feeding line switching device 11a and the workpiece-side feeding line switching device 11b open.

In this state, the stray capacitance C1 between the electrode 1 and the workpiece 7, the stray capacitance C2 between the first electrode-side feeding line 4a and the first workpiece-side feeding line 4b, the stray capacitance C3 between the electrode 1 and the table 6, stray capacitance C4 between the first electrode-side feeding line 4a and the table 4b, the stray capacitance C5 between the electrode-side power supply circuit line of the first machining power source 2 and the table 6, the stray capacitance C6 between the electrode-side power supply circuit line and the workpiece-side power supply circuit line of the first machining power source 2, and the stray capacitance C7 between the workpiece 7 and the table 6, and the stray capacitance C8 between the first workpiece-side feeding line 4b and the table 6, and the stray capacitance C9 between the workpiece-side power supply circuit line of the first machining power source 2 and the table 6.

The large stray capacitances C2, C6 are connected with the small stray capacitance in series and connected in series with the stray capacitance C7 together with the stray capacitance C3.

Thus, the total stray capacitance in the electric discharge circuit in finish machining is reduced in comparison with the conventional circuit arrangement since the stray capacitances other than the stray capacitance C3 are connected with the stray capacitance C3 in series and the large stray capacitances C2 and C6 are connected with the small stray capacitance C9 in series.

In tins embodiment, the workpiece-side feeding line switching device 11b may be arranged within the first machining power source 2 to obtain the substantially the same effects.

An example of the stray capacitances is shown in the following table-1. The table-1 shows the stray capacitances according to experiments using the actual electric discharge machine.

TABLE-1

|  | STRAY CAPACITANCE (nF) |
| --- | --- |
| C1 | 0.5 |
| C2 | 15.0 |
| C3 | 2.5 |
| C4 | 1.5 |
| C5 | 4.0 |
| C6 | 100.0 |
| C7 | 2.5 |
| C8 | 1.5 |
| C9 | 4.0 |

Further, the following table-2 shows a result of calculation of the total stray capacitances in respective electric discharge circuits based on the stray capacitances shown in the table-1.

TABLE-2

|  | TOTAL STRAY CAPACITANCE (nF) | RATIO TO BASIC CIRCUIT | RATIO TO 1ST PRIOR ART |
|---|---|---|---|
| BASIC CIRCUIT | 123.5 | 100.0% | 4117% |
| 1ST PRIOR ART | 3.0 | 2.4% | 100% |
| 2ND PRIOR ART | 3.0 | 2.4% | 100% |
| FIRST EMBODIMENT | 1.8 | 1.5% | 60% |
| SECOND EMBODIMENT | 2.5 | 2.0% | 83% |
| THIRD EMBODIMENT | 2.5 | 2.0% | 83% |

From the above examples, the reduction of the total stray capacitance in comparison with the conventional arrangements is confirmed.

The electric discharge energy may be suppled to the workpiece 7 directly by connecting the first workpiece-side feeding line 4b and the second workpiecc-side feeding line 5b directly to the workpiece 7 and also indirectly using an insulator 9 provided between the workpiece 7 and the table 6 by connecting the first workpiece-side feeding line 4b and the second workpiece-side feeding line 5b to the insulator 9.

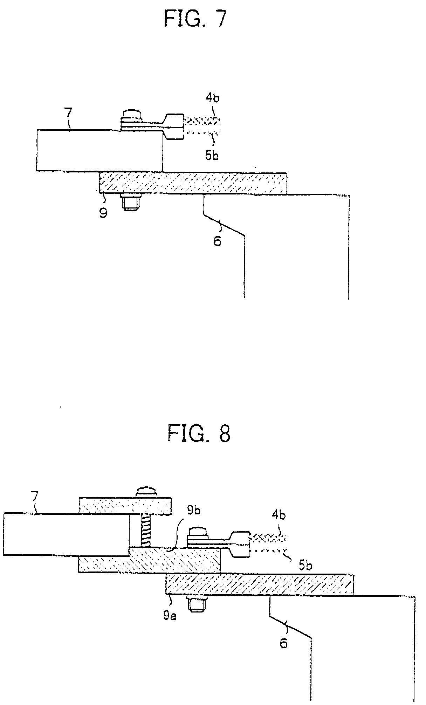

FIG. 7 shows an arrangement of direct connection of the feeding lines to the workpiece and FIG. 8 shows an arrangement of indirect connection of the feeding lines to the workpiece.

In FIG. 7, the workpiece 7 is mounted on the table 6 through the insulator 9 and the first workpiece-side feeding line 4b and the second workpiece-side feeding line 5b are directly connected to the workpiece 7.

In FIG. 8, the workpiece 7 is mounted on the table 6 through an insulator 9a and the first workpiece-side feeding line 4b and the second workpiece-side feeding line 5b are connected to a fixture 9b. Thus, the electric current is indirectly supplied to the workpiece 7 through the fixture 9b.

According to the embodiments of the present invention, the total amount of the stray capacitances formed between the electrode and the workpiece is reduced by switching the switches to suppress the electric discharge energy from the stray capacitances in the case where the electric discharge energy is required to be reduced such as finishing machining, to thereby improve the roughness of the finished surface by the electric discharge machining.

In the case of performing the rough machining, a large electric discharge energy is supplied from the machining power source by changing over the switching devices.

The above embodiments may be selectively adopted depending on a structure of the electric discharge machining apparatus in capability of arranging the electrode-side feeding line switching device and the workpiece-side feeding line switching device in the vicinity of the electrode or the workpiece.

As described, according to the present invention, surface roughness of the machined surface is improved by sufficiently reducing the stray capacitance between the electrode and the workpiece.

**Claims**

1. , An electric discharge machining apparatus for machining a workpiece by an electric discharge energy, comprising:

   an electrode;

   a first machining power source for supplying a first electric discharge energy between said electrode and the workpiece;

   a second machining power source for supplying a second electric discharge energy smaller than the second electric discharge energy between said electrode and the workpiece;

   a workpiece mounting device for mounting the workpiece;

   an insulator for electrically insulating the workpiece from said workpiece mounting device;

   a first switching device for opening/closing a first feeding line from said first machining power source to the electrode;

a second switching device for opening/closing a second feeding line from said first machining power source to the workpiece;

wherein said first and second switching devices are closed when supplying the first electric discharge energy form said first machining power source and said first and second switching devices are opened when supplying the second electric discharge energy form said second machining power source.

2. An electric discharge machining apparatus according to claim 1, wherein said first switching device is arranged in the vicinity of said electrode and said second switching device is arranged in the vicinity of the workpiece

3. An electric discharge machining apparatus according to claim 1, wherein said first switching device is arranged in the vicinity of said first machining power source and said second switching device is arranged in the

4. An electric discharge machining apparatus according to claim 1, wherein said first switching device is arranged in the vicinity of said electrode and said second switching device is arranged in the vicinity of said first machining power source.

5. An electric discharge machining apparatus according to claim 1, wherein said first machining power source is electrically connected to the workpiece directly.

6. An electric discharge machining apparatus according to claim 1, wherein said first machining power source is electrically connected to the workpiece indirectly through a fixture.

## FIG. 1

## FIG. 2

## FIG. 3

## FIG. 4

# FIG. 5

# FIG. 6

FIG. 7

FIG. 8

## FIG. 9

## FIG. 10

FIG. 11

FIG. 12

## FIG. 13

## FIG. 14